# EUROPEAN PATENT APPLICATION

(11) **EP 1 911 615 A1**
(43) Date of publication of application: **16.04.2008**
(21) Application number: 06781767.6
(22) Date of filing: 27.07.2006
(51) Int. Cl.: B60H 1/00

(54) **AIR CONDITIONER FOR AUTOMOBILE**

(30) Priority: 03.08.2005 JP 2005225156
(71) Applicant: Calsonic Kansei Corporation, Tokyo 164-8602 (JP)
(72) Inventor: OZEKI, Yukio c/o Calsonic Kansei Corp., Tokyo 164-8602 (JP); ONDA, Masaharu c/o Calsonic Kansei Corp., Tokyo 164-8602 (JP)
(74) Representative: Schuster, Thomas
(86) International application number: PCT/JP2006/314856
(87) International publication number: WO 2007/015413

(57) **Abstract**

A twin-type blower motor unit that drives fans provided on both sides in an axial direction by an electric motor is disposed on an upper portion of a main casing in the vertical direction. The blower motor unit is movably assembled in the vehicle widthwise direction with respect to the main casing.

## Description

### TECHNICAL FIELD

The present invention relates to a vehicular air conditioner.

### BACKGROUND ART

As a required air volume is increased and a required size is reduced, there has been proposed a twin-type blower that drives two fans using one electric motor as a blower used for a vehicular air conditioner instead of a blower (one-side blower type) that drives one fan using one electric motor.

It is preferable that a blower, a rotating device, has a structure that can be attached and detached easily for maintenance, inspection, and repair. In the case of the one-side blower, for example, if a vehicular air conditioner which has a blower at its lower portion in the vertical direction is disposed on a passenger side, the blower can be easily attached and detached. In the case of a vehicular air conditioner which has a blower at its upper portion and tends to be well-used in recent years, the blower can be easily attached and detached through a glove box.

Fig. 1 shows a vehicular blower 201 (a twin-type blower) described in Patent Document 1. In the vehicular blower 201, a biaxial motor 203 and a pair of fans 205, 207 are disposed in the vertical direction. A case 209 comprises a suction unit 211 and a discharge unit 213 fixed to the suction unit 211 such that the discharge unit 213 penetrates therein.
Patent Document 1: Japanese Patent Application Laid-open No. H7-144528

### DISCLOSURE OF THE INVENTION

However, in the case of a structure of the vehicular blower 201, in order to remove the biaxial motor 203 and the fans 205, 207, the blower must be disassembled entirely, the number of disassembling steps is high, and much time and cost are required. If there is an fresh air intake doorfresh air circumferentially, the disassembling operation becomes more difficult.

The present invention has been achieved in view of the problem of the conventional technique, and it is an object of the present invention to provide a vehicular air conditioner to which a blower motor unit can be easily attached and form which it can be detached without removing or disassembling the air conditioner from the vehicle entirely.

The vehicular air conditioner of the present invention for achieving the above object comprises a twin-type blower motor unit disposed in an upper portion of a main casing (in the vertical direction). The blower motor unit includes a pair of fans disposed on both sides of an electric motor in its axial direction and driven by an electric motor. The blower motor unit is movably assembled in a vehicle widthwise direction with respect to the main casing.

In the vehicular air conditioner of the present invention having such a structure, the blower motor unit can be easily detached from the main casing only by moving the blower motor unit in the vehicle widthwise direction. Since it is unnecessary to remove the air conditioner from the vehicle entirely or disassemble the air conditioner when removing the blower motor unit, the detaching cost is largely reduced.

In the case of a structure where a gap is provided between fan cases and the main casing of the blower motor unit, the pulling out operation of the blower motor unit becomes easy, the gap functions as an air passage (an air path), and the efficiency of the blower motor unit is enhanced correspondingly.

In the case of a structure where a hook is provided on a side member of the main casing and/or the blower motor unit, it becomes easy to attach and detach the blower motor unit or the side member.

In the case of a structure where the blower motor unit is movably assembled in the vehicle widthwise direction with respect to the main casing by a slide-guiding holder that is slidable in the vehicle widthwise direction, and flanges and grooves of the slide-guiding holder function as a seal mechanism, it is easy to remove the blower motor unit as described above, air-leak is reduced by the seal function of the flanges and grooves, and the efficiency of the blower motor unit is enhanced correspondingly.

### BRIEF DESCRIPTION OF THE DRAWINGS

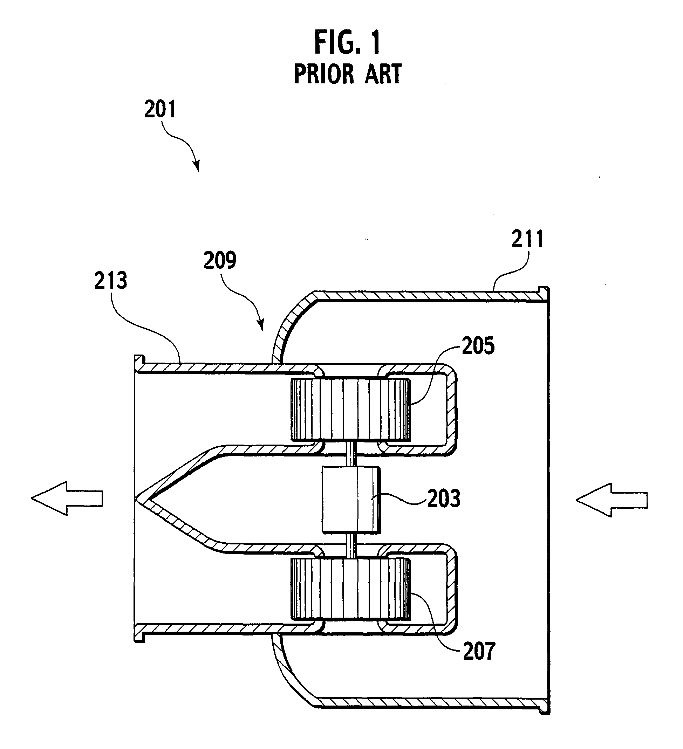

Fig. 1 is a sectional view of a conventional vehicular air conditioner;
Fig. 2 is a diagram showing a vehicular air conditioner and its mounting direction according to an embodiment of the present invention;
Fig. 3 is a sectional view taken along the line 3-3 in Fig. 2;
Fig. 4 is an enlarged view of a portion B in Fig. 2;
Fig. 5 is a perspective view of a blower motor unit;
Fig. 6 is a diagram showing a removing method I of the blower motor unit; and
Fig. 7 is a diagram showing a removing method II of the blower motor unit.

### BEST MODE(S) FOR CARRYING OUT THE INVENTION

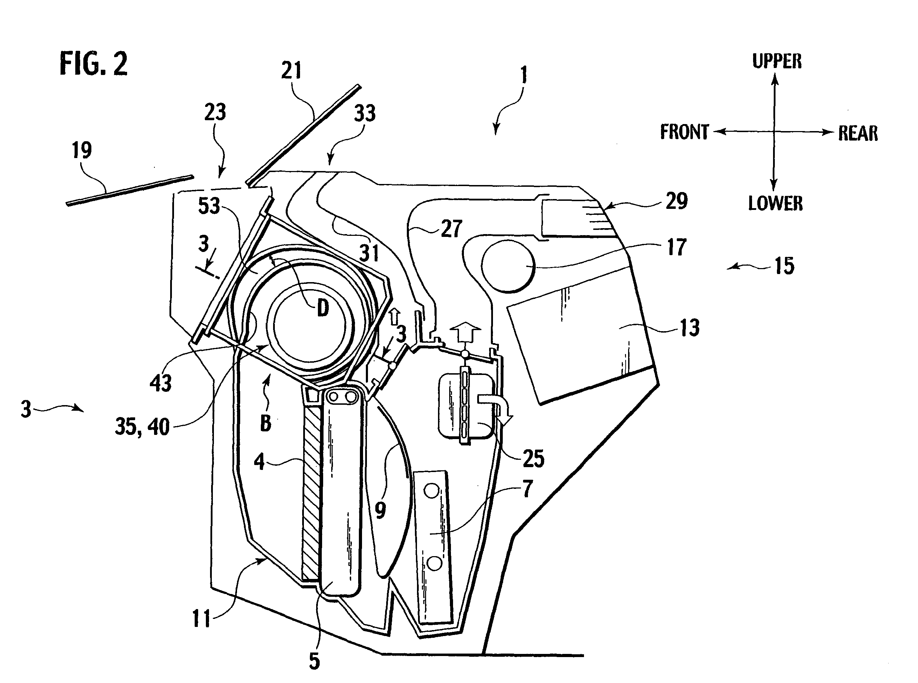

A vehicular air conditioner 1 according to an embodiment of the present invention will be explained below with reference to Fig. 2 to Fig. 7.

Fig. 2 shows the vehicular air conditioner 1. The vehicular air conditioner 1 includes a blower motor unit 3, an air filter 4, a cooling heat exchanger 5, a heating heat exchanger 7, an air mix door 9 for adjusting a mixture rate of air from the cooling heat exchanger 5 and the heating heat exchanger 7, and a main casing 11 (an HVAC case) for accommodating these elements. The vehicular air conditioner 1 is disposed in front of an instrument panel 15 on which an audio device 13 and so on are mounted and a cross-car beam 17 which is disposed in the instrument panel 15 in a vehicle widthwise direction. The blower motor unit 3 is disposed in a forward and vertical upper portionin the vehicular air conditioner 1.

If the blower motor unit 3 is operated, fresh air is sucked from an fresh air intake port 23 provided between a hood 19 and a front window 21, the fresh air passes through an air filter 4, and the fresh air is cooled by the cooling heat exchanger 5 or heated by the heating heat exchanger 7. The mixture rate of the cooled or heated fresh air is adjusted by the air mix door 9, and is sent into a passenger compartment from a foot vent 25 or from a vent grill 29 through a duct 27. The air is ventilated from a defroster nozzle 33 through the duct 31 to the inner surface of the front window 21.

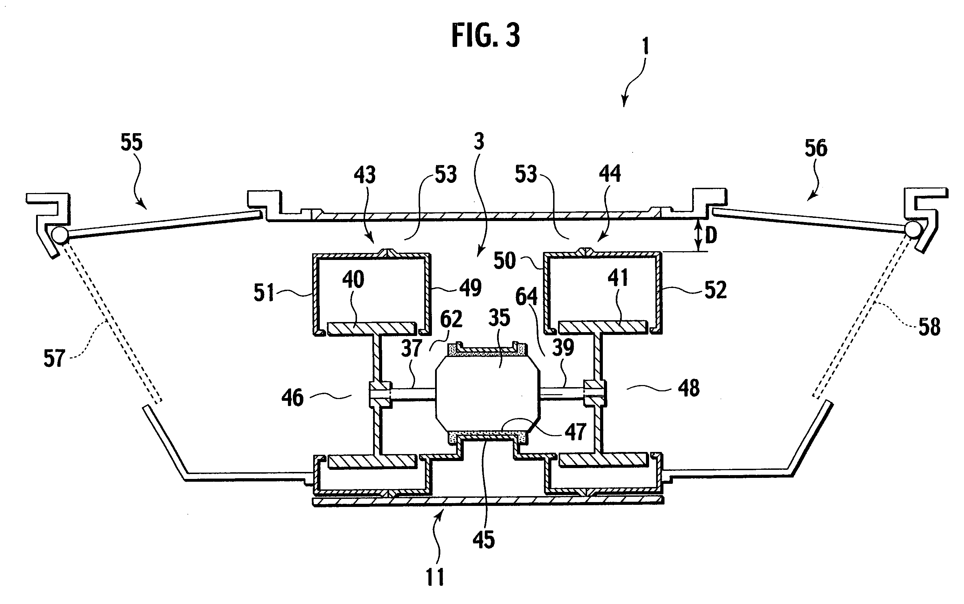

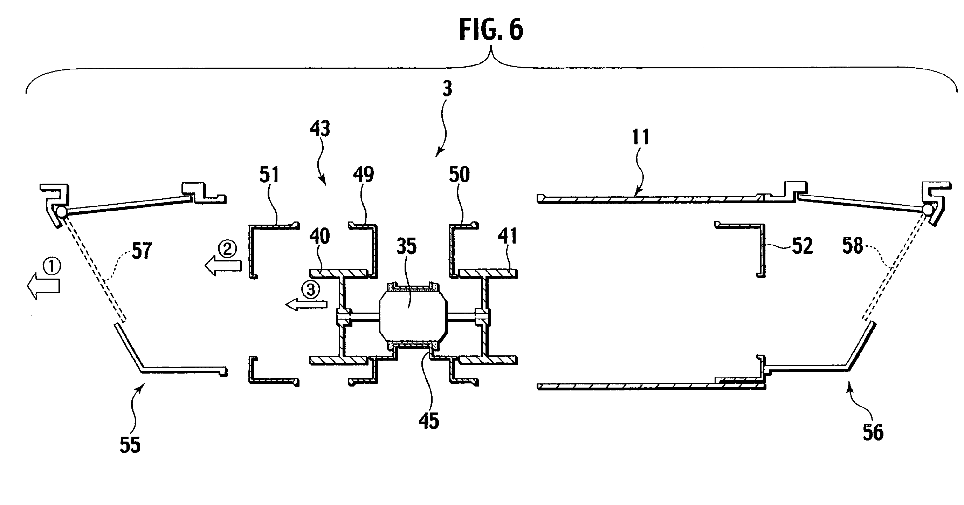

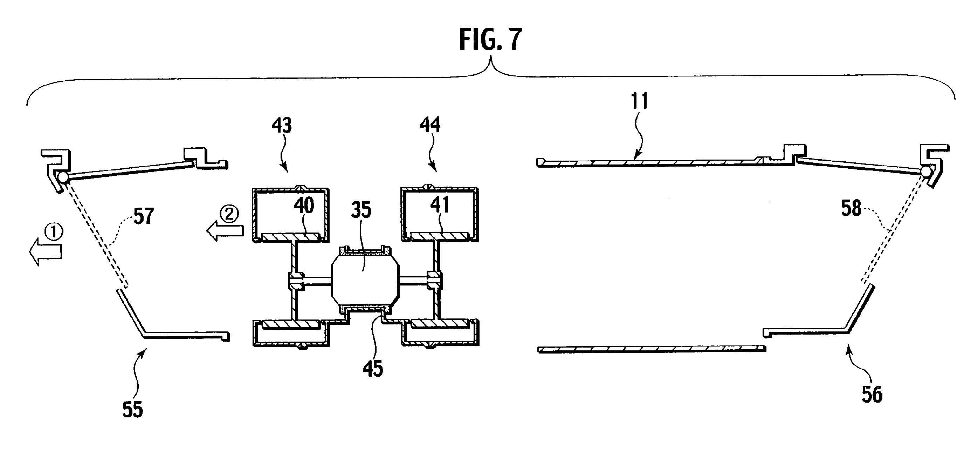

As shown in Fig. 3, the blower motor unit 3 includes an electric motor 35 which can output power at both ends of a rotation shaft, a pair of fans 40, 41 mounted on a output shaft 37, 39, and scrolls (fan cases) 43, 44 which accommodates the fans 40, 41 respectively. The electric motor 35 is mounted on a central case 45 provided at the center of the scrolls 43, 44 via a soft mount member 47 that absorbs vibration. The scrolls 43, 44 respectively includes center scrolls 49, 50 connected to the central case 45, and scroll-side sidewalls 51, 52 respectively fixed to the scrolls 49, 50 as shown in Figs. 6 and 7.

In a state where the electric motor 35 is mounted on the central case 45, a gap 53 of width D is provided between outer peripheries of the scrolls 43, 44 and an inner periphery of the main casing 11. The gap 53 functions as an air passage. Intake ports 62, 64 which respectively open on the center scrolls 49, 50 are communicated with air intake cases 55, 56 via the gap 53 like intake ports 46, 48 of the scrolls 43, 44.

As shown in Figs. 3, 6, and 7, air intake cases (side members) 55, 56 are mounted on both sides of the blower motor unit 3 in the widthwise direction. The air intake cases 55, 56 are respectively provided with air intake doors 57, 58.

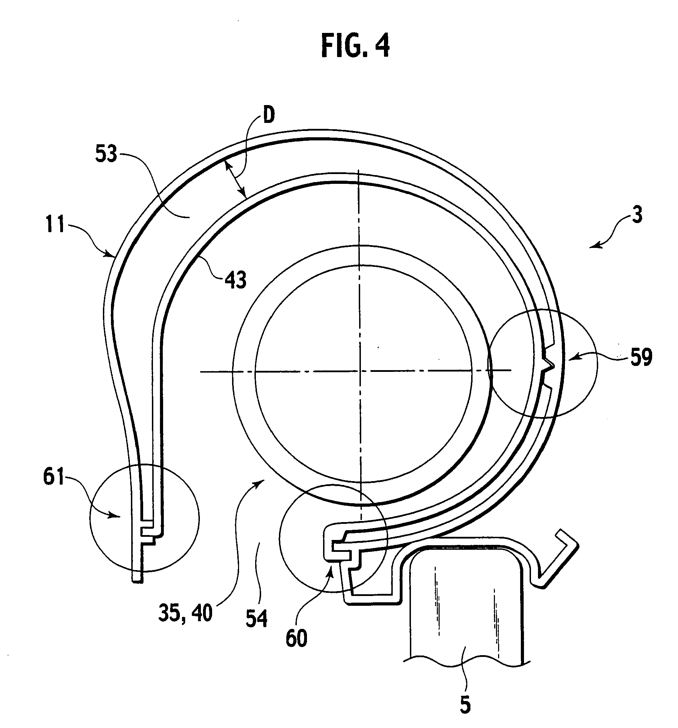

As shown in Fig. 4, slide-guiding holders 59, 60, 61 are provided between the scrolls 43, 44 of the blower motor unit 3 and the main casing 11. The slide-guiding holders 59, 60, 61 is slidable in the widthwise direction using the flanges and grooves of their own. The blower motor unit 3 is movably assembled in the widthwise direction with respect to the main casing 11 by these slide-guiding holders 59, 60, 61. The flanges and grooves of the slide-guiding holders 59, 60, 61 are labyrinth grooves, and there is an effect that air discharged from a discharge port 54 of the blower motor unit 3 to the main casing 11 is prevented from reversely flowing toward the gap 53.

Since the blower motor unit 3 is movably assembled in the vehicle widthwise direction in this manner, the blower motor unit 3 can be detached from the main casing 11 by a method I shown in Fig. 6 or a method II shown in Fig. 7.

According to the method I shown in Fig. 6,
(1) the left air intake case 55 is detached from the main casing 11,
(2) the scroll-side sidewall 51 of the left scroll 43 is detached from the center scroll 49, and
(3) the remaining blower motor unit 3 (without the left scroll-side sidewall 51) is detached from the main casing 11 by use of the slide-guiding holders 59, 60, 61.

According to the method II shown in Fig. 7,
(1) the left air intake case 55 is detached from the main casing 11, and
(2) the whole blower motor unit 3 is detached from the main casing 11 by use of the slide-guiding holders 59, 60, 61.

According to the vehicular air conditioner 1 having the structure described above, the blower motor unit 3 can be easily detached from the main casing 11 by moving the blower motor unit 3 in the vehicle widthwise direction. As a result, when the blower motor unit 3 is to be detached, it is unnecessary to detach the whole vehicular air conditioner 1 from the vehicle or to disassemble the vehicular air conditioner 1 entirely. Thus, the detaching cost is largely reduced.

Since the gap D is provided between the scrolls 43, 44 and the main casing 11, it becomes easy to pull out the blower motor unit 3. Since the gap D functions as the air passage, the efficiency of the blower motor unit 3 is enhanced.

If the air intake cases 55, 56 and/or the blower motor unit 3 is provided with hooks 63, 65, the attaching and detaching operations are facilitated. In fact, at the time of attaching and detaching operations, if a part mounted within the instrument panel 15 of the vehicle is provided with the hooks 63 and 65, there are effects that even when both hands cannot effectively use at the time of the pulling out operation, a pull-out location for easily detaching can be indicated and a pulling force can be easily applied to a part which is to be pulled out.

The air leakage is reduced and efficiency is enhanced due to the labyrinth seal functions of the slide-guiding holders 59, 60, 61.

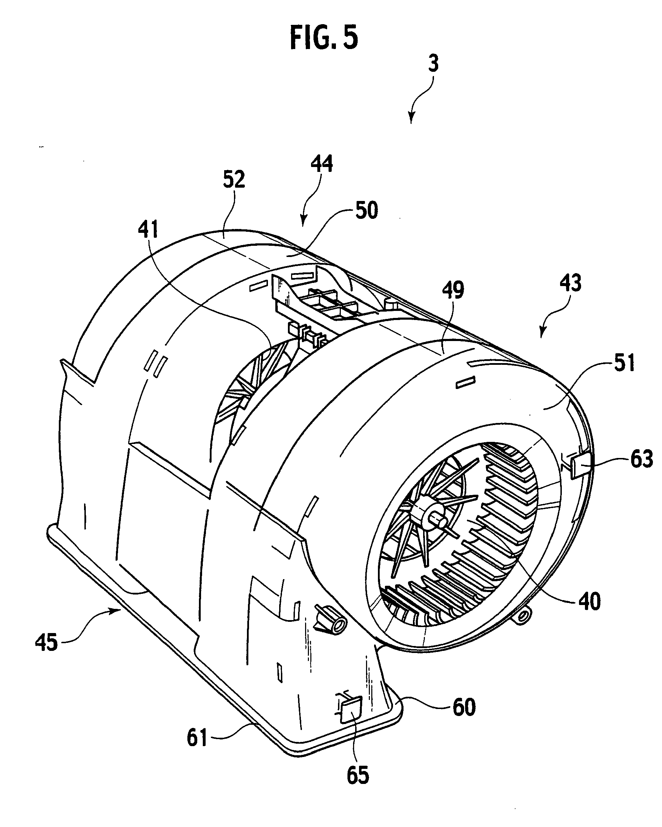

Fig. 5 shows an example in which the blower motor unit 3 is provide with the hooks 63, 65 and the slide-guiding holders 59, 60, 61. While air leakage between the blower unit and the main casing 11 is reduced by the slide-guiding holders, the sliding friction is increased on the contrary. Here, in order to facilitate the sliding at the time of the attaching and detaching operations, the hooks 63, 65 are provided on the side surface of the blower motor unit 3 in a pulling out direction. At the time of pulling out operation, a hand, a finger or a tool can be easily hooked and a force is effectively applied. Since the hooks 63, 65 are provided near the slide-guiding holders, the pulling out force is applied to the area where the sliding friction is occurred. Therefore, the attaching and detaching operation is enhanced. Such hooks can be provided on the air intake cases (side members) 55, 56. With this configuration, the air intake cases (side members) 55, 56 can easily slide. Both of or one of the air intake cases (side members) 55, 56 can be provided with the hook.

According to the vehicular air conditioner of the present invention, a different type blower (fan(s) and fan case(s)) from that of the embodiment can be used arbitrarily.

In the above embodiment, the blower motor unit 3 is detached from the left side, but in the vehicular air conditioner of the present invention, the right air intake case 56 can be removed and the blower motor unit 3 can be detached from the right side if necessary.

### INDUSTRIAL APPLICABILITY

In the vehicular air conditioner of the present invention, since a blower motor unit can be moved in the widthwise direction, the blower motor unit can be easily detached from a main casing, thereby largely reducing the detaching cost.

## Claims

1. A vehicular air conditioner comprising:
a twin-type blower motor unit including a pair of fans that are disposed on both sides of an electric motor in its axial direction and driven by the electric motor; and
a main casing,
wherein the blower motor unit is disposed in an upper portion of the main casing and movably assembled in a vehicle widthwise direction with respect to the main casing.

2. The vehicular air conditioner according to claim 1,
wherein the blower motor unit includes the electric motor, the pair of fans, and fan cases for accommodating the fans, and
a gap that functions as an air passage is provided between the fan cases and the main casing.

3. The vehicular air conditioner according to claim 2,
wherein the main casing includes a side member disposed in the vehicle widthwise direction of the blower motor unit, and
a hook is provided on the side member and/or the fan case.

4. The vehicular air conditioner according to claim 1, further comprising a slide-guiding holder that is provided between the blower motor unit and the main casing and slidable in the vehicle widthwise direction,
wherein the blower motor unit is movably assembled in the vehicle widthwise direction with respect to the main casing by the slide-guiding holder, and
the slide-guiding holder includes flanges and grooves constituting a seal mechanism.

## Amended claims

### Amended claims under Art. 19.1 PCT

**1.** (Amended) A vehicular air conditioner comprising:
a twin-type blower motor unit including a pair of fans that are disposed on both sides of an electric motor in its axial direction and driven by the electric motor; and
a main casing,
wherein the blower motor unit is disposed in an upper portion of the main casing, movably assembled in a vehicle widthwise direction with respect to the main casing, and includes the electric motor, the pair of fans, fan cases for accommodating the fans, and intake ports for sucking air into the fan cases by the fans, and
a gap that functions as an air passage is provided between the fan cases and the main casing, and communicated with the intake ports.

**2.** (Deleted)

**3.** (Amended) The vehicular air conditioner according to claim 1,
wherein the main casing includes a side member disposed in the vehicle widthwise direction of the blower motor unit, and
a hook is provided on the side member and/or the fan case.

**4.** The vehicular air conditioner according to claim 1, further comprising a slide-guiding holder that is provided between the blower motor unit and the main casing and slidable in the vehicle widthwise direction,
wherein the blower motor unit is movably assembled in the vehicle widthwise direction with respect to the main casing by the slide-guiding holder, and
the slide-guiding holder includes flanges and grooves constituting a seal mechanism.

**5.** (Added) The vehicular air conditioner according to claim 1,
wherein the intake ports are opened to both sides of the fan case in a direction of an output shaft of the motor.

**6.** (Added) The vehicular air conditioner according to claim 1 or 5,
wherein air intake cases are provided on both ends of the blower motor unit in a vehicle widthwise direction, and
the air intake cases are communicated with each other through the gap.
